# EUROPEAN PATENT APPLICATION

(11) **EP 4 700 590 A1**
(43) Date of publication of application: **25.02.2026**
(21) Application number: 25185642.3
(22) Date of filing: 26.06.2025
(51) Int. Cl.: G06F 13/38, G06F 13/40, G06F 13/42, G09G 5/00, H04L 47/62, H04L 47/80, H04N 21/426, H04N 21/4363, G06F 3/14, H04N 7/083, H04N 21/236, H04N 21/434

(54) **INFORMATION TRANSCEIVING METHOD AND INFORMATION TRANSCEIVING SYSTEM**

(30) Priority: 22.08.2024 TW 113131598
(71) Applicant: Realtek Semiconductor Corp., HsinChu 30076 (TW)
(72) Inventor: Huang, Yueh-Hsing, 30076 HsinChu (TW)
(74) Representative: Straus, Alexander

(57) **Abstract**

An information transceiving method, applied to an information transceiving system (100, 200) comprising a transmission device (101) and a reception device (103). The transmission device (101) comprises a first TX input interface (TR_1) following a first transceiving specification and a second TX input interface (TR_2) following a second transceiving specification. The reception device (103)0 comprises a first RX output interface (RO_1) following a third transceiving specification. The information transceiving method comprises: (a) respectively receiving first, second information by the first, second TX input interface (TR_1, TR_2); (b) classifying according to information characteristics of the first, second information by the transmission device (101), to acquire first, second classifying results of the first, second information; and (c) transmitting the first information or the second information to the first RX output interface (RO_1) via a physical transmission line (105), corresponding to the first, second classifying results by the transmission device (101).

## Description

### Field of the Invention

This invention relates to an information transceiving method and an information transceiving system capable of using different interfaces.

### Background of the Invention

Modern electronic devices use a variety of transceiving specification to transmit information, such as HDMI (High Definition Multimedia Interface), USB- C (universal serial bus type C interface), and PCIe (Peripheral Component Interconnect Express). Users usually need corresponding connection cables and electronic devices must have the same interface. For example, if a user wants to connect a DVD player to the HDMI interface of a TV, the DVD player must have an HDMI interface and the user must have a corresponding HDMI cable. For another example, if a user wants to connect a hard drive to the USB-C interface of a computer, the hard drive must have a USB-C interface and the user must have a corresponding USB-C cable. Alternatively, users can use an adapting device (such as an adapter cable or adapter) to allow information transceiving between interfaces using different transceiving specification. However, traditional adapting devices usually only perform one-to-one conversion, that is, converting information corresponding to one transceiving specification into information corresponding to another transceiving specification. These restrictions make it inconvenient for users to use various electronic devices.

Moreover, in the conventional long-distance image data transmission technology, in order to maintain stable data transmission, optical fibers are always used. However, in such state, the transceiving interfaces using different transceiving specifications must be connected to optical fibers, respectively, which further increase the complexity and cost of the production and design of such devices or systems. Additionally, such devices or systems may have synchronization problems when transmitting data, since they use different transceiving specifications.

### Summary of the Invention

The invention aims at providing an information transceiving method which allows the transmitting end to comprise various interfaces with stable image data transmission and reception, while using a physical transmission line.

The invention also aims at providing an information transceiving method which can reduce a number of fiber converters.

The invention further aims at providing an information transceiving system which allows the transmitting end to comprise various interfaces with stable image data transmission and reception, while using a physical transmission line.

The invention further aims at providing an information transceiving system which can reduce a number of fiber converters.

This is achieved by an information transceiving method and a system, according to claims 1 and 11 respectively. The dependent claims pertain to corresponding further developments and improvements.

As will be seen more clearly from the detailed description below, the claimed information transceiving method is applied to an information transceiving system with a transmission device and a reception device. The transmission device comprises a first TX input interface following a first transceiving specification and a second TX input interface following a second transceiving specification, the reception device comprises a first RX output interface following a third transceiving specification, and the information transceiving method comprises: (a) receiving first information by the first TX input interface and receiving second information by the second TX input interface; (b) performing classifying according to information characteristics of the first information and the second information by the transmission device, to acquire a first classifying result of the first information and a second classifying result of the second information; and (c) transmitting the first information or the second information to the first RX output interface via at least one physical transmission line, according to the first classifying result and the second classifying result, by the transmission device.

The claimed information transceiving system comprises a transmission device and a reception device. The transmission device comprises: a first processor; a first TX input interface, following a first transceiving specification; a second TX input interface, following a second transceiving specification. The reception device comprises: a first RX output interface, following a third transceiving specification. The first processor and the second processor are configured to perform an information transceiving method comprising following steps: (a) receiving first information by the first TX input interface and receiving second information by the second TX input interface; (b) performing classifying according to information characteristics of the first information and the second information by the transmission device, to acquire a first classifying result of the first information and a second classifying result of the second information; and (c) transmitting the first information or the second information to the first RX output interface via at least one physical transmission line, according to the first classifying result and the second classifying result, by the transmission device.

In view of the above-mentioned embodiments, the present invention provides an information transceiving system and an information transceiving method in which the transmission end can comprise a variety of different interfaces. The information transceiving system can select an appropriate transmission method according to the type of information, thereby improving convenience and stability of information transceiving using physical transmission lines. In addition, according to the foregoing embodiments, the information transceiving system provided by the present invention has a smaller number of fiber converters when using optical fibers, thereby reducing manufacturing costs.

### Brief Description of the Drawings

In the following, the invention is further illustrated by way of example, taking reference to the following drawings. Thereof:
FIG.1 is a schematic diagram illustrating an information transceiving system according to an embodiment of the present invention.
FIG.2 is a schematic diagram illustrating an information transceiving system according to another embodiment of the present invention.
FIG.3 is a schematic diagram illustrating how to classify information from input interfaces of different transmission ends according to an embodiment of the present invention.
FIG.4 illustrates a schematic diagram of packets used by a transmission device according to an embodiment of the present invention.
FIG.5 illustrates a block diagram of a first FIFO (first-in-first-out) buffer used in a transmission device according to an embodiment of the present invention.
FIG.6 illustrates a block diagram of a second FIFO buffer used by a reception device according to an embodiment of the present invention.
FIG.7 is a schematic diagram illustrating that the information transceiving system is used for single direction image transmission, according to one embodiment of the present invention.
FIG.8 is a schematic diagram illustrating that the information transceiving system is used for bi-direction image transmission, according to one embodiment of the present invention.
FIG.9 illustrates a flow chart of an information transceiving method according to an embodiment of the present invention.

### Detailed Description

Several embodiments are provided in the following description to explain the concept of the present invention. Besides, the method in the following description can be performed by programs stored in a non-transitory computer readable recording medium by a processing circuit. The non-transitory computer readable recording medium can be, for example, a hard disk, an optical disc or a memory. Additionally, the term "first", "second", "third" in following descriptions are only for the purpose of distinguishing different one elements, and do not mean the sequence of the elements. For example, a first device and a second device only mean these devices can have the same structure but are different devices.

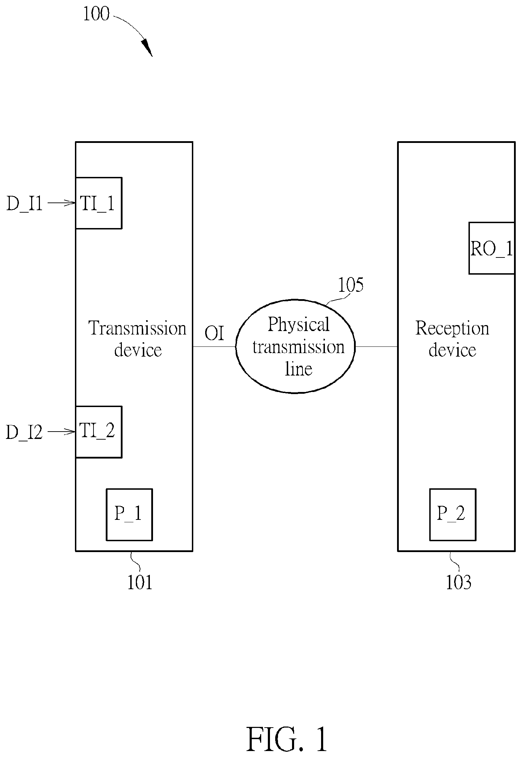

FIG. 1 is a schematic diagram illustrating an information transceiving system according to an embodiment of the present invention. As shown in FIG. 1, the information transceiving system 100 comprises a transmission device 101 and a reception device 103. In one embodiment, the functions of the transmission device 101 and the reception device 103 may be interchanged, that is, the transmission device 101 is used as a reception device and the reception device 103 is used as a transmission device. The transmission device 101 comprises a first TX input interface TI_1 following a first transceiving specification and a second TX input interface TI_2 following a second transceiving specification. The reception device 103 comprises a first RX output interface RO_1 following a third transceiving specification. The first transceiving specification is different from the second transceiving specification. In one embodiment, the third transceiving specification is different from the first transceiving specification and the second transceiving specification. For example, the first transceiving specification is HDMI, the second transceiving specification is PCI-e, and the third transceiving specification is USB-C. In another embodiment, the third transceiving specification is the same as one of the first transceiving specification and the second transceiving specification. For example, the first transceiving specification is USB-C, the second transceiving specification is PCI-e, and the third transceiving specification is USB-C.

If the output information transmitted by the transmission device 101 originally follows the transceiving specification which is used by the first RX output interface RO_1, the first RX output interface RO_1 can directly receive the output information and transmits the output information to the electronic device connected (wired or wirelessly) to the first RX output interface RO_1. On the contrary, if the output information OI transmitted by the transmission device 101 follows a transceiving specification different from the transceiving specification used by the first RX output interface RO_1, the reception device 103 must convert the output information into the format which the first RX output interface RO_1 can receive, Next, the converted output information OI is received by the first RX output interface RO_1 and then transmitted to the electronic device connected to the first RX output interface RO_1. Please also note that the information stated in the present invention means all signals transmitted by the transmission devices 101, which may comprise information used to indicate or specify the access address, such as headers, and may comprise data. The information may also represent a check code, such as a CRC (Cyclic redundancy check) code. In the following embodiments, information is transmitted in packet format, so the transmission device 101 classifies each packet.

In the embodiment of FIG. 1, the transmission device 101 comprises a first processor P_1 (e.g., a CPU, a MCU or a processing circuit), which can be used to control the action of the transmission device 101. The reception device 103 comprises a second processor P_2, which can be used to control the actions of the reception device 103. Please also note that in the embodiment of FIG. 1, information transceiving between the transmission device 101 and the reception device 103 is performed through a physical transmission line 105. In following embodiments, the physical transmission line 105 is an optical fiber, but not limited. The first TX input interface TI_1 receives the first information D_I1 and the second TX input interface TI_2 receives the second information D_I2. The transmission device 101 performs classifying according to the information characteristics of the first information D_I1 and the second information D_I2 to obtain a first classifying result of the first information D_I1 and a second classifying result of the second information D_I2. The transmission device 101 correspondingly transmits the first information D_I1 or the second information D_I2 to the first RX output interface RO_1 according to the first classifying result and the second classifying result.

In one embodiment, the classifying result comprises at least one of the following parameters: information synchronization type, required immediacy, and required completeness. For example, the classifying results comprise information synchronization type and required immediacy, or required immediacy and required completeness. The information synchronization type refers to the synchronization method used by the information. For example, if the information is audio and video information following the HDMI specification or the USB specification, the audio and video information is synchronized according to the horizontal synchronization signal Hsync. For another example, if the information follows the General Control Packet specified by HDMI or the information follows the HDCP (High-Bandwidth Digital Content Protection) specification, the information is transmitted based on the vertical synchronization signal Vsync. After the information is classified according to the information synchronization type, the transmission device 101 can quickly know how to synchronize the information through the classifying results while transmitting or the reception device 103 can quickly know how to synchronize the information through the classifying results while receiving, so as to increase the accuracy of transmitting information.

The required immediacy is the tolerable delay of the information. For example, if the information from the user input interface (such as keyboard or mouse) is delayed, the user will experience a more obvious delay. Alternatively, if the control command which the IrDA (Infrared Data Association) specification and is from a remote control is delayed, the user will experience considerable inconvenience. Therefore, such type of information has a high required immediacy.

The required completeness is the tolerable amount of information loss, such as the tolerable amount of packet loss. For example, if the information is audio and video information following HDMI, Display port or USB, too much information loss will affect the integrity of the image or sound effects, so this type of information has a high required completeness. On the contrary, if the information comes from the mouse, the mouse's trajectory is usually composed of continuous movements, so even if part of the movement output by the mouse is lost, the trajectory can still maintain most of its integrity. , so this type of information has a low required completeness.

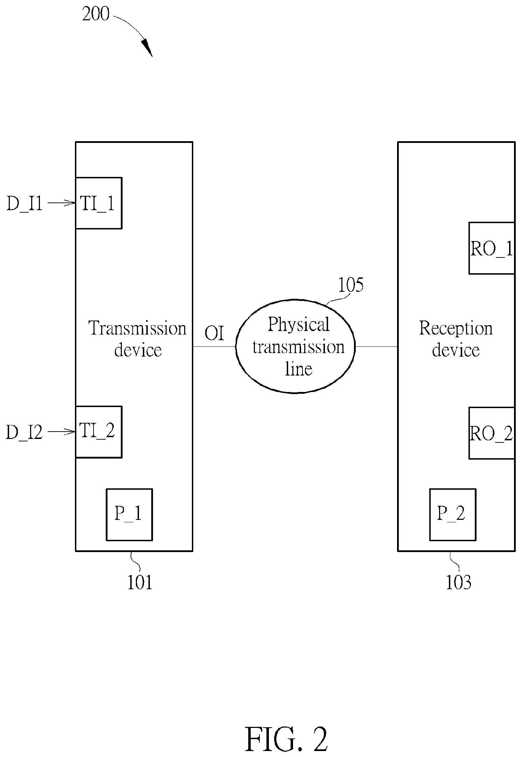

FIG. 1 illustrates a many-to-one information transceiving system 100. However, the information transceiving system provided by the present invention can also be many-to-many. FIG.2 is a schematic diagram illustrating an information transceiving system according to another embodiment of the present invention. As shown in FIG. 2, the information transceiving system 200 comprises a transmission device 101 and a reception device 103_1. In addition to the first RX output interface RO_1, the reception device 103_1 further comprises a second RX output interface RO_2 following a fourth transceiving specification. The transmission device 101 transmits the first information D_I1 and the second information D_I2 to the first RX output interface RO_1 or the second RX output interface RO_2 according to the first classifying result and the second classifying result. In one embodiment, the third transceiving specification and the fourth transceiving specification are different, and the first transceiving specification, the second transceiving specification, the third transceiving specification and the fourth transceiving specification are all different. Other detail characteristics of the second RX output interface RO_2 have been described in the relevant descriptions of FIG. 1, thus are omitted for brevity here.

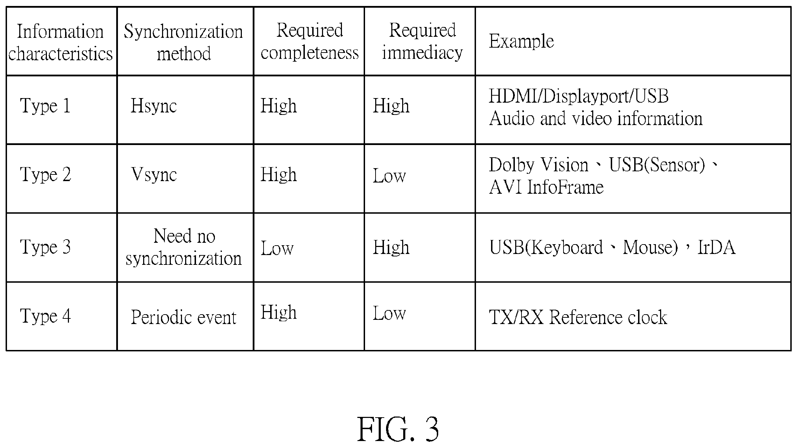

FIG.3 is a schematic diagram illustrating how to classify information from input interfaces of different transmission ends according to an embodiment of the present invention. In the example in FIG. 3, four types are used for illustration. Type 1 information is classified based on the horizontal synchronization signal Hsync, which requires a high required completeness and a high required immediacy, such as audio and video information following the HDMI specification, the Display port specification, or the USB specifications. Type 2 information is classified based on the vertical synchronization signal Vsync. The required completeness is high and the required immediacy is low, such as audio and video information that follows the Dolby Vision specification and sensor signals that follows the USB specification, or InfoFrame in the HDMI specification.

Type 3 information does not need to be synchronized, the required completeness is low and the required immediacy is high, such as input interface information following the USB specification (such as information provided by a keyboard or mouse), or information that follows the IrDA specification. The synchronization method of type 4 information is based on periodic events. For example, a signal in a specific format will be generated every 100ms. Type 4 information requires a high required completeness and a low required immediacy, such as the reference clock signal used by the transmission device 101 or the reception device 103. However, please note that FIG. 3 is only used to illustrate how to classify information and does not mean to limit the present invention. For example, information can be classified into more or fewer types rather than limited to four types. In another example, required completeness and required immediacy can be divided into more levels rather than just high and low levels. Besides, corresponding to different devices or transceiving requirements, the same information can also be set to have different required completeness or required immediacy for different devices. The concept of the present invention can also be applied to other information, such as audio from a microphone, information following HDCP specification, audio from an AUX audio line, or CEC (Consumer Electronics Control) commands. In addition, according to the example in FIG. 3, even information that follows the same specifications may be classified into different types because of its different information characteristics. For example, information which follows the HDMI specification but has different functions may be classified into different types.

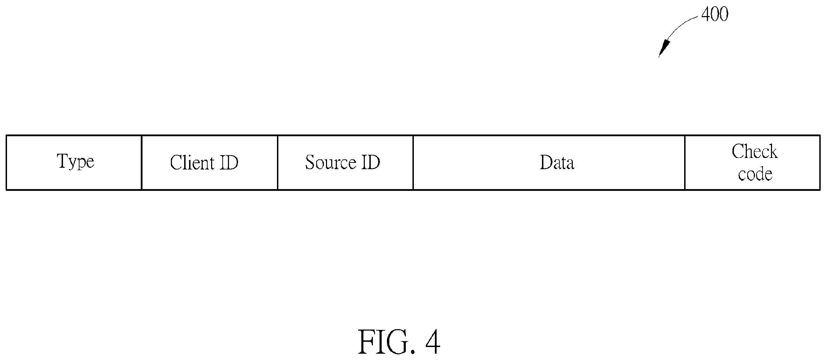

As mentioned above, the information transmitted by the transmission device 101 can be transmitted in a packet format. FIG.4 illustrates a schematic diagram of the packets 400 used by a transmission device according to an embodiment of the present invention. As shown in FIG. 4, packet 400 contains classifying results, Client ID, Source ID, data and check code. The classifying result is the result obtained after classifying the information in the aforementioned embodiments. The Client ID represents the receiving output interface to which the information is sent, and the Source ID represents the TX input interface from which the information comes. The data is the data that the transmission device 101 wants to transmit to the reception device 103, such as video data or audio data. The check code is used by the reception device 103 to confirm whether the data it receives is correct, and may be the aforementioned CRC, for example.

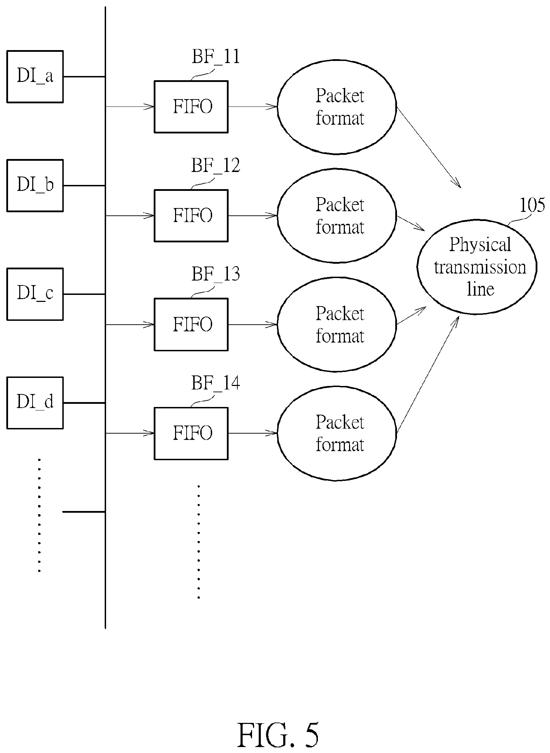

In one embodiment, the transmission device 101 comprises a plurality of first first-in-first-out (FIFO) buffers. In such case, the transmission device 101 buffers the portions of the first information D_I1 and the second information D_I2 which have the same classifying results into the same FIFO buffer, and then transmit them to the RX output interface. FIG.5 illustrates a block diagram of a first FIFO buffer used in a transmission device according to an embodiment of the present invention. As shown in FIG. 5, the transmission device 101 comprises a plurality of first FIFO buffers BF_11, BF_12, BF_13 and BF_14. After receiving the information DI_a, DI_b, DI_c... from the TX input interface following different transceiving specifications, the transmission device 101 classifies the information DI_a, DI_b, DI_c, and then buffers the information with the same classifying result into an identical FIFO buffer. For example, type 1 information is buffered in the first FIFO buffer BF_11 and type 2 information is buffered in the first FIFO buffer BF_12.

In one embodiment, the transmission device 101 reads the information from the first FIFO buffer BF_11, BF_12, BF_13 or BF_14 and transmits the information through the physical transmission line 105 in a packet format. The transmission device 101 transmits information in different transmission methods corresponding to different classifying results. For example, the synchronization method of type 1 information in FIG. 3 is based on the horizontal synchronization signal Hsync. Therefore, the transmission device 101 performs synchronization based on the horizontal synchronization signal Hsync when transmitting type 1 information, or the reception device 103 performs synchronization based on the horizontal synchronization signal Hsync when receiving type 1 information. For another example, the type 1 information in FIG. 3 has a high required completeness. Therefore, when transmitting the type 1 information, the transmission device 101 completes the transmission of type 1 information which has a larger data amount, before transmitting other types of information to ensure the completeness thereof. Alternatively, a stronger check code is provided when transmitting the type 1 information to ensure the completeness thereof. Further, the same type 1 information may be transmitted for several times to ensure its completeness. For another example, the type 1 information in FIG. 3 has a high required immediacy, so the transmission device 101 gives a high priority for transmitting the type 1 information buffered in the first FIFO buffer BF_11.

In another embodiment, the reception device 103 comprises a plurality of second FIFO buffers. In such case, when the reception device 103 receives the output information from the transmission device 101, it buffers output information to a corresponding one of the second FIFOs according the first RX output interface or the second RX output interface which the output information to is transmitted to. Next, the output information is transmitted to the first RX output interface or the second RX output interface which the output information is to be transmitted to. The output information here is the information that the transmission device 101 first classifies and then transmits through the physical transmission line 105 in the aforementioned embodiments.

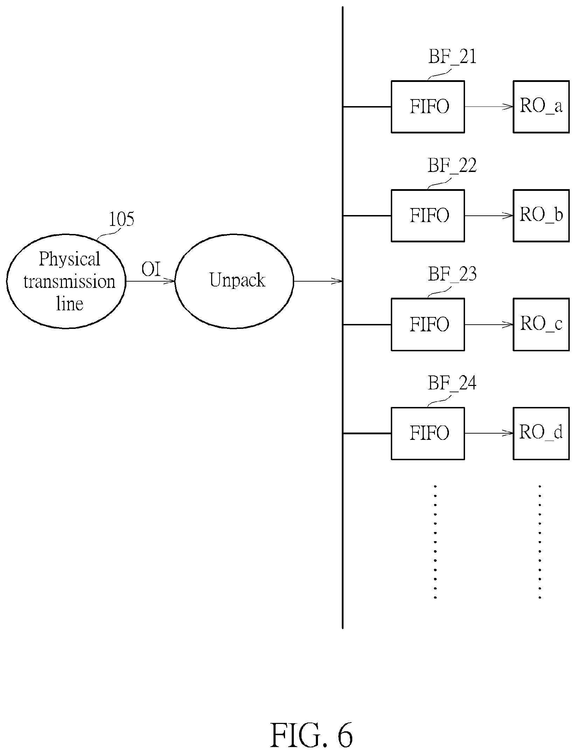

FIG.6 illustrates a block diagram of a second FIFO buffer used by a reception device according to an embodiment of the present invention. As shown in FIG. 6 , the reception device 103 comprises a plurality of second FIFO buffers BF_21, BF_22, BF_23 and BF_24, which respectively correspond to the RX output interfaces RO_a, RO_b, RO_c and RO_d. As above-mentioned, when the reception device 103 receives the output information from the transmission device 101, it buffers output information to a corresponding one of the second FIFOs according the first RX output interface or the second RX output interface which the output information to is transmitted to. Next, the output information is transmitted to the first RX output interface or the second RX output interface. For example, the output information OI to be transmitted to the RX output interface RO_a is buffered in the corresponding second FIFO buffer BF_21, and the output information OI to be transmitted to the RX output interface RO_b is buffered in the corresponding second FIFO buffer BF_22. Then, the information in the second FIFO buffer BF_21 is transmitted to the RX output interface RO_a according to the transceiving specification which the RX output interface RO_a follows. Similarly, the information in the second FIFO buffer BF_22 is transmitted to the RX output interface RO_b according to the transceiving specification which the RX output interface RO_b follows.

In addition to the transceiving methods described in FIG. 5 and FIG.6, other conventional transceiving methods can also be used in the present invention. For example, an arbitrator in conventional data transceiving methods can be used to decide which one to send or receive first based on the required immediacy of the information. Alternatively, in one embodiment, the transmission may be started after the amount of information in the first FIFO buffer is accumulated to a predetermined amount.

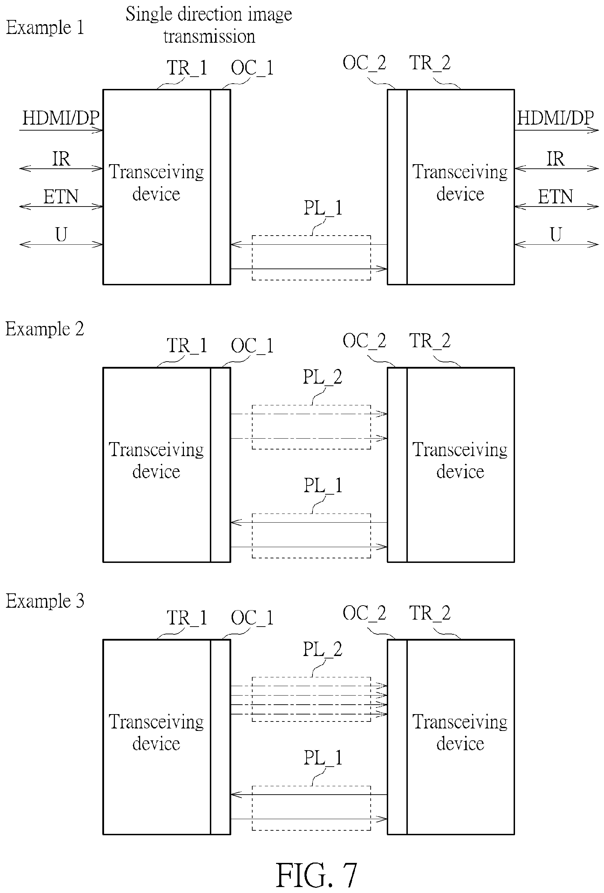

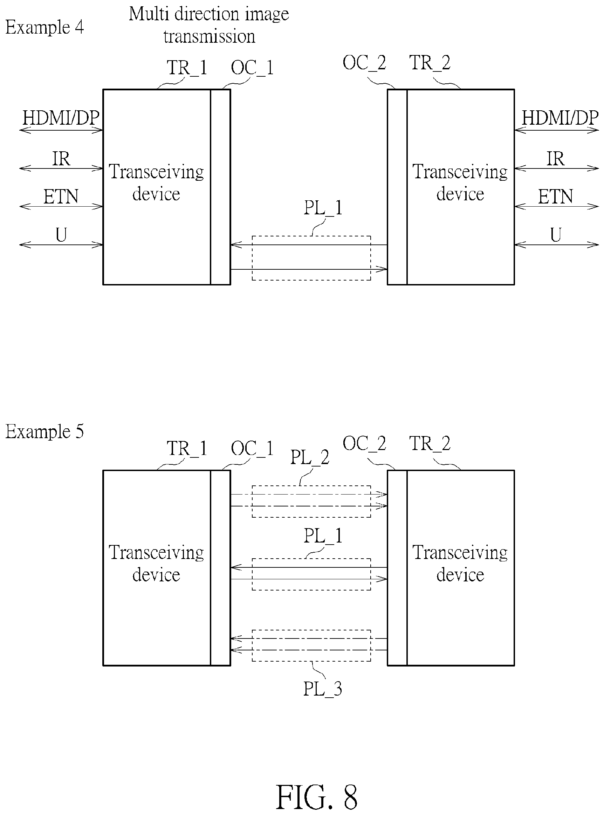

The following will use FIGs 7 and 8 to illustrate the operation of the aforementioned information transceiving system in transmitting image data through optical fibers. Please also note that although the following embodiments take image data as an example, the system can also be applied to the transmission or reception of other data, such as audio and video data. FIG.7 is a schematic diagram illustrating that the information transceiving system is used for single direction image transmission, according to one embodiment of the present invention. In Examples 1, 2 and 3, the information transceiving systems all comprise a first transceiving device TR_1 and a second transceiving device TR_2, which can be used only as a transmission device or only as a reception device. For example, the first transceiving device TR_1 can be used as the transmission device 101 of the aforementioned FIGs 1 and 2, and the second transceiving device TR_2 can be used as the aforementioned reception device 103. However, the first transceiving device TR_1 or the second transceiving device TR_2 may also have both transmission and reception functions. Both the first transceiving device TR_1 and the second transceiving device TR_2 can use the structure, transmission mechanism and reception mechanism in the aforementioned embodiments.

In the Example 1 of FIG.7, the information transmitted or received by the information transceiving system comprises image data and a control signal which controls the action of an electronic device, and the information transceiving system transmits the image data and the control signal through the same first physical transmission line PL_1. For example, the first transceiving device TR_1 can transmit the first image data complying with the HDMI specification or the Display Port specification to the second transceiving device TR_2 through the first physical transmission line PL_1. The first image data may also comply with other specifications. However, since the information transceiving system in FIG.7 is a single direction image data transmission, the second transceiving device TR_2 cannot transmit any image data to the first transceiving device TR_1.

In addition, the first transceiving device TR_1 can transmit a control signal to the second transceiving device TR_2 through the first physical transmission line PL_1 to control an electronic device connected to the second transceiving device TR_2. For example, the first transceiving device TR_1 can transmit the infrared control signal IR to the second transceiving device TR_2 through the first physical transmission line PL_1 to control a TV connected to the second transceiving device TR_2. Alternatively, the first transceiving device TR_1 can transmit the control signal Etn that complies with the Ethernet specification or the control signal U that complies with the USB specification to the second transceiving device TR_2 through the first physical transmission line PL_1 to control a computer connected to the second transceiving device TR_2. The second transceiving device TR_2 can also send the aforementioned control signal to the first transceiving device TR_1 to control an electronic device connected to the first transceiving device TR_1.

In Examples 2 and 3 of FIG.7, the transmission direction and type of information can be the same as Example 1. Therefore, for the clarity, descriptions and figures thereof are not repeated here. In Examples 2 and 3 in FIG. 7, different physical transmission lines are used to transmit the image data and control signals in Example 1. Specifically, in Examples 2 and 3, the first transceiving device TR_1 still transmits the control signal to the second transceiving device TR_2 through the first physical transmission line PL_1, and the second transceiving device TR_2 can also transmit the control signal through the first physical transmission line PL_1. The first physical transmission line PL_1 transmits the control signal to the first transceiving device TR_1. However, the first transceiving device TR_1 in Examples 2 and 3 transmits the first image data to the second transceiving device TR_2 through the second physical transmission line PL_2, instead of through the first physical transmission line PL_1 as in Example 1. In addition, since the information transceiving system in FIG. 7 is a single direction image data transmission, the second transceiving device TR_2 cannot transmit any image data to the first transceiving device TR_1.

The optical fiber uses the reflection of light for transmission, and usually uses the same kind of light, that is, the light used to transmit information has only one wavelength, such as the second physical transmission line PL_2 shown in Example 2. However, if information needs to be transmitted at high frequencies, transmission using only one type of light may not be able to meet the required transmission speed. Therefore, in one embodiment, information is transmitted through multi types of light with different wavelengths, that is, the light used to transmit information has multiple wavelengths, such as the second physical transmission line PL_2 shown in Example 3.

In the embodiment of FIG. 7, the first transceiving device TR_1 and the second transceiving device TR_2 respectively comprise fiber converters OC_1 and OC_2, which are used to convert electrical signals into optical signals or convert optical signals into electrical signals. Both the first transceiving device TR_1 and the second transceiving device TR_2 only comprise one fiber converter. That is, both the first transceiving device TR_1 and the second transceiving device TR_2 use a single photoelectric converter to convert information into a plurality of optical signals that can be transmitted by the physical transmission line.

In the conventional technology, if optical fibers are to be used to transmit information, each of the transceiving interfaces that comply with different specifications (that is, different types of transceiving interfaces) must have an fiber converter. For example, the interface that comply with the HDMI specification, the interface that comply with the Display port specification, and the interface that comply with the USB specification each requires a dedicated fiber converter. Therefore, systems with different types of transceiving interfaces will require a large number of fiber optic converters. In comparison, the embodiment in FIG.7 of the present application only requires one fiber converter and can be used in systems containing different types of transceiving interfaces, which can significantly reduce production costs and design complexity.

In the embodiment of FIG.8, the information transceiving system is a bi-direction image transmission. The hardware structure and type of information transmitted in Example 4 in FIG.8 can be the same as Example 1 in FIG.7. The difference between Example 4 in FIG.8 and Example 1 in FIG.7 is that the information transceiving system in Example 4 is a bi-direction image transmission. Therefore, in Example 4 in FIG.8, the first transceiving device TR_1 can transmit the first image data that complies with the HDMI specification or the Display Port specification to the second transceiving device TR_2 through the first physical transmission line PL_1, and the second transceiving device TR_2 can also transmit image data complying with the HDMI specification or the Display Port specification to the first transceiving device TR_1 through the first physical transmission line PL_1.

The first transceiving device TR_1 can transmit a control signal to the second transceiving device TR_2 through the first physical transmission line PL_1 to control an electronic device connected to the second transceiving device TR_2. For example, the first transceiving device TR_1 can transmit the infrared control signal IR to the second transceiving device TR_2 through the first physical transmission line PL_1 to control a TV connected to the second transceiving device TR_2. Alternatively, the first transceiving device TR_1 can transmit the control signal Etn that complies with the Ethernet specification or the control signal U that complies with the USB specification to the second transceiving device TR_2 through the first physical transmission line PL_1 to control a computer connected to the second transceiving device TR_2. The second transceiving device TR_2 can also transmit the aforementioned control signal to the first transceiving device TR_1 through the first physical transmission line PL_1 to control an electronic device connected to the first transceiving device TR_1.

In Example 5 of FIG.8, the transmission direction and type of information can be the same as Example 4. For clarity, figures and descriptions there are not repeated here. In Example 5 in FIG. 8, different physical transmission lines are used to transmit the image data and control signals in Example 4. For more detail, in Example 5, the first transceiving device TR_1 still transmits the control signal to the second transceiving device TR_2 through the first physical transmission line PL_1, and the second transceiving device TR_2 can also transmit the control signal in the same manner. However, the first transceiving device TR_1 in Example 5 transmits the first image data to the second transceiving device TR_2 through the second physical transmission line PL_2, instead of through the first physical transmission line PL_1 as in Example 4. Moreover, the second transceiving device TR_2 in Example 5 transmits the second image data to the first transceiving device TR_1 through the third physical transmission line PL_3, instead of through the first physical transmission line PL_1 as in Example 4.

The first transceiving device TR_1 and the second transceiving device TR_2 can also use the same physical transmission line to transmit image signals to each other as in Example 2. In the case of higher frequency transmission, different physical transmission lines can be used to allow the transceiving devices to transmit image signals to each other to ensure the completeness of the image data. In the case of lower frequency transmission, the same physical transmission line can be used to allow the transceiving devices to transmit image signals to each other to save costs or power consumption.

In view of foregoing embodiments, an information transceiving method can be obtained, which is applied to an information transceiving system (such as the information transceiving system 100) having a transmission device and a reception device. The transmission device may be the first transceiving device TR_1 shown in FIGS. 7 and 8, and the reception device may be the second transceiving device TR_2 shown in FIGS. 7 and 8. The transmission device comprises a first TX input interface complying with a first transmission specification and a second TX input interface complying with a second transmission specification, and the reception device comprises a first RX output interface complying with a third transmission specification.

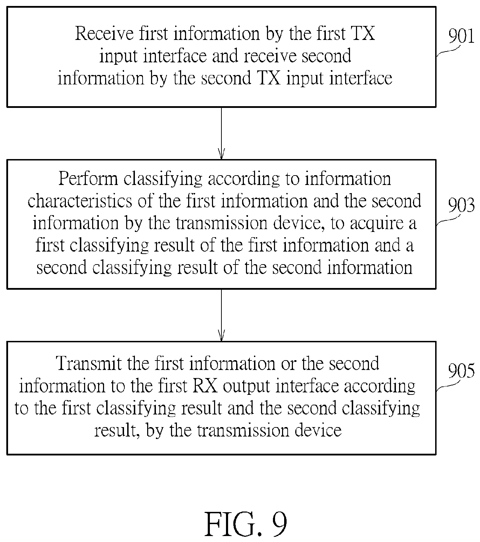

The information transceiving method comprises the following steps shown in FIG. 9:

### Step 901

Receive first information by the first TX input interface (for example, TI_1) and receive second information by the second TX input interface (for example, TI_2).

### Step 903

Perform classifying according to information characteristics of the first information and the second information by the transmission device, to acquire a first classifying result of the first information and a second classifying result of the second information

### Step 905

Transmit the first information or the second information to the first RX output interface (for example, RO_1) according to the first classifying result and the second classifying result, by the transmission device.

The reception device may comprise a plurality of RX output interfaces, such as the embodiment shown in FIG.2. Other detailed steps have been described in the above-mentioned embodiments, and thus are omitted for brevity here.

The aforementioned information transceiving system and information transceiving method can be used, but are not limited to, in situations where wireless communication cannot be used due to distance or environment constraints, or where stable transmission and reception of information is required thus physical transmission lines are used. For example, it can be used in factories, hospitals or transportation vehicles.

In view of the above-mentioned embodiments, the present invention provides an information transceiving system and an information transceiving method in which the transmission end can comprise a variety of different interfaces. The information transceiving system can select an appropriate transmission method according to the type of information, thereby improving convenience and stability of information transceiving using physical transmission lines. In addition, according to the foregoing embodiments, the information transceiving system provided by the present invention has a smaller number of fiber converters when using optical fibers, thereby reducing manufacturing costs.

## Claims

1. An information transceiving method, applied to an information transceiving system (100, 200) with a transmission device (101) and a reception device (103), the transmission device (101) comprising a first TX input interface (TR_1) following a first transceiving specification and a second TX input interface (TR_2) following a second transceiving specification, the reception device (103) comprising a first RX output interface (RO_1) following a third transceiving specification, the information transceiving method **characterized by**:
(a) receiving first information by the first TX input interface (TR_1) and receiving second information by the second TX input interface (TR_2);
(b) performing classifying according to information characteristics of the first information and the second information by the transmission device (101), to acquire a first classifying result of the first information and a second classifying result of the second information; and
(c) transmitting the first information or the second information to the first RX output interface via at least one physical transmission line (105), according to the first classifying result and the second classifying result, by the transmission device (101).

2. The information transceiving method of claim 1, **characterized in that** the step (b) performs classifying according to information synchronization types, required immediacy or required completeness of the first information and the second information.

3. The information transceiving method of claim 1, **characterized in that** the transmission device (101) comprises a plurality of first FIFOs (BF_11, BF_12, BF_13, BF_14), wherein the step (c) further comprises:
buffering information of the first information and the second information which have identical buffering results to an identical one of the first FIFOs (BF_11, BF_12, BF_13, BF_14), and then transmitting the information to the first RX output interface (RO_1).

4. The information transceiving method of claim 1, **characterized in that** the reception device (103) further comprises a second RX output interface (RO_2) following a fourth transceiving specification, wherein the step (c) further comprises:
transmitting the first information and the second information to the first RX output interface (RO_1) or the second RX output interface (RO_2) according to the first classifying result and the second classifying result.

5. The information transceiving method of claim 1, **characterized in that** the first information and the second information comprise image data and a control signal which controls the action of an electronic device, wherein the information transceiving method further comprises:
the transmission device (101) transmitting the image data and the control signal through a first physical transmission line (PL_1).

6. The information transceiving method of claim 1, **characterized in that** a number of the physical transmission lines (105) is larger than or equal to two, wherein the transmission device (101) and the reception device (103) are both transceiving devices, and the first information and the second information are first image data, wherein the information transceiving method further comprises:
the transmission device (101) transmitting the first image data to the reception device (103) through a second physical transmission line (PL_2), and the reception device (103) transmitting the second image data to the transmission device (101) through a third physical transmission line (PL_3).

7. The information transceiving method of claim 1, **characterized in that** the physical transmission line (105) is an optical fiber, and the information transceiving method further comprises:
the transmission device (101) transmitting the first information or the second information to the first RX output interface (RO_1) through the physical transmission line (105), using multi types of light with different wavelengths.

8. An information transceiving system (100, 200), **characterized by**:
a reception device (103), comprising:
a second processor (P_2); and
a first RX output interface (RO_1), following a third transceiving specification; and
a transmission device (101), comprising:
a first TX input interface (TR_1), following a first transceiving specification;
a second TX input interface (TR_2), following a second transceiving specification; and
a first processor (P_1), configured to receive first information by the first TX input interface (TR_1) and receive second information by the second TX input interface (TR_2), perform classifying according to information characteristics of the first information and the second information to acquire a first classifying result of the first information and a second classifying result of the second information, and transmit the first information or the second information to the first RX output interface (RO_1) via at least one physical transmission line (105), according to the first classifying result and the second classifying result.

9. The information transceiving system (100, 200) of claim 8, **characterized in that** the transmission device (101) comprises a plurality of first FIFOs (BF_11, BF_12, BF_13, BF_14), wherein the first processor (P_1) is further configured to:
buffer information of the first information and the second information which have identical
buffering results to an identical one of the first FIFOs (BF_11, BF_12, BF_13, BF_14), and then transmit the information to the first RX output interface (RO_1).

10. The information transceiving system (100, 200) of claim 8, **characterized in that** the reception device (103) further comprises a second RX output interface (RO_2) following a fourth transceiving specification, wherein the first processor (P_1) is further configured to:
transmit the first information and the second information to the first RX output interface (RO_1) or the second RX output interface (RO_2) according to the first classifying result and the second classifying result.

11. The information transceiving system (100, 200) of claim 8, **characterized in that** the first information and the second information comprise image data and a control signal which controls the action of an electronic device, wherein the transmission device (101) transmits the image data and the control signal through an identical one of the physical transmission line (105).

12. The information transceiving system (100, 200) of claim 8, **characterized in that** the transmission device (101) and the reception device (103) are both transceiving devices, the first information and the second information are first image data, and the reception device (103) cannot transmit any image data to the transmission device (101).

13. The information transceiving system (100, 200) of claim 8, **characterized in that** a number of the physical transmission lines (105) is larger than or equal to two, wherein the transmission device (101) and the reception device (103) are both transceiving devices, and the first information and the second information are first image data;
wherein the transmission device (101) transmits the first image data to the reception device (103) through a first physical transmission line (PL_1), and the reception device (103) transmits the second image data to the transmission device (101) through a second physical transmission line (PL _2).

14. The information transceiving system (100, 200) of claim 8, **characterized in that** the physical transmission line (105) is an optical fiber, wherein the transmission device (101) transmits the first information or the second information to the first RX output interface (RO_1) through the physical transmission line (105), using multi types of light with different wavelengths.

15. The information transceiving system (100, 200) of claim 8, **characterized in that** the physical transmission line (105) is an optical fiber, wherein the transmission device (101) uses a single photoelectric converter (OC_1, OC_2) to convert the first information or the second information into a plurality of optical signals which can be transmitted by the physical transmission line (105).
